# EUROPÄISCHE PATENTSCHRIFT

(11) **EP 3 641 980 B1**
(45) Veröffentlichungstag und Bekanntmachung des Hinweises auf die Patenterteilung: **23.02.2022**
(21) Anmeldenummer: 18734179.7
(22) Anmeldetag: 21.06.2018
(51) Int. Cl.: B23K 26/03, B23K 26/06, G01B 11/24, B23K 31/12, G02B 26/08, G01B 5/00

(54) **VERFAHREN ZUR ABSTANDSMESSUNG FÜR EIN LASERBEARBEITUNGSSYSTEM UND LASERBEARBEITUNGSSYSTEM**
METHOD FOR MEASURING THE DISTANCE IN A LASER MACHINING DEVICE, AND LASER MACHINING DEVICE
PROCÉDÉ DE MESURE DE LA DISTANCE DANS UN DISPOSITIF D'USINAGE LASER ET DISPOSITIF D'USINAGE LASER

(30) Priorität: 23.06.2017 DE 102017114033
(43) Veröffentlichungstag der Anmeldung: 29.04.2020
(73) Patentinhaber: Precitec GmbH & Co. KG, 76571 Gaggenau (DE)
(72) Erfinder: MOSER, Rüdiger, 76316 Malsch (DE)
(74) Vertreter: Ter Meer Steinmeister & Partner
(86) Internationale Anmeldenummer: PCT/EP2018/066658
(87) Internationale Veröffentlichungsnummer: WO 2018/234500

(56) Entgegenhaltungen:
- DE-A1-102015 007 142
- US-A1- 2013 148 925
- US-A1- 2016 202 045

## Beschreibung

Die vorliegende Offenbarung betrifft eine Vorrichtung und ein Verfahren zur Abstandsmessung für ein Laserbearbeitungssystem, und betrifft ein Laserbearbeitungssystem. Die vorliegende Offenbarung betrifft insbesondere einen Laserschweißkopf mit einem optischen Kohärenztomographen.

### Stand der Technik

Bei einem Lasertiefschweißprozess entsteht während eines Schweißvorgangs entlang der Strahlachse des Bearbeitungsstrahls eine Dampfkapillare, die auch "Keyhole" genannt wird und die von flüssiger Schmelze umgeben ist. Die Tiefe der Dampfkapillare steht in Zusammenhang mit der Tiefe der Schweißnaht- oder Einschweißtiefe. Die Einschweißtiefe ist ein wichtiger Parameter, da eine zu geringe Tiefe fehlende Festigkeit der Schweißverbindung zur Folge haben kann. Im Gegensatz hierzu kann eine zu große Tiefe ein Durchschweißen bewirken, wodurch die Schweißnaht auf der Rückseite sichtbar wird.

Zur Bestimmung der Tiefe der Dampfkapillare bzw. der Einschweißtiefe kann ein Messstrahl verwendet werden, der in die Dampfkapillare gelenkt wird. Sowohl die Größe bzw. der Durchmesser des Messstrahls an der Werkstückoberfläche als auch die laterale Auftreffposition sind dabei entscheidend für eine fehlerfreie Messung der Tiefe der Dampfkapillare bzw. der Einschweißtiefe. Die Auftreffposition des Messstrahls kann durch Ablenken des Messstrahls eingestellt werden. Da bei der Strahlablenkung der Messstrahl nicht mehr auf der optischen Achse verläuft, erfährt der Messstrahl Abbildungsfehler (Aberrationen), die den Durchmesser des Messstrahls im Bereich des Fokus vergrößern. Somit kann die Messung der Tiefe der Dampfkapillare bzw. der Einschweißtiefe ungenau und fehlerbehaftet sein.

Zur Strahlablenkung können Spiegeloptiken (z.B. Galvo-Scanner) verwendet werden, wie sie beispielhaft in den Druckschriften US 2016/0039045 A1, DE 10 2013 225 108 A1, EP 1 977 850 B1 und DE 10 2014 113 283 B4 beschrieben sind. Bei der Positionierung des Messstrahls auf die Dampfkapillare besitzen Spiegel zwei Nachteile. Zum einen bewirken kleine Winkeländerungen des Spiegels große Positionsänderungen des Messstrahls aufgrund des Reflexionsgesetzes. Zum anderen beeinflusst ein Planspiegel, abgesehen von Richtungsänderungen, den Messstrahl nicht. Anders gesagt können Abbildungsfehler, die beispielsweise in der Fokussieroptik bei nicht axialem Durchtritt des Messstrahls entstehen, durch den Planspiegel nicht kompensiert werden. Bei der Verwendung von Galvo-Scannern können F-Theta Objektive als Fokussieroptik verwendet werden, die dafür sorgen, dass der Messstrahl unabhängig der Ablenkung immer den gleichen Durchmesser behält. Diese Objektive sind jedoch teuer und in der Regel auch nur für eine Wellenlänge optimiert. Der hochenergetische Bearbeitungsstrahl und der Messstrahl besitzen häufig jedoch unterschiedliche Wellenlängen.

Des Weiteren ist aus der WO 2016/062636 A1 eine Vorrichtung zur Messung der Tiefe einer Schweißnaht in Echtzeit beim Schweißen oder Fügen eines Werkstücks mittels Strahlung bekannt. Zur lateralen Einstellung der Fokuslage des Messlichtstrahls ist die Austritts- /Eintrittsfläche des Lichtwellenleiters gegenüber der Kollimierlinse quer zu ihrer optischen Achse verschiebbar. Hierfür sind Antriebe mit hoher Präzession erforderlich.

US 2016/0202045 A1 zeigt eine Laserbearbeitungsvorrichtung mit einer Zerstreuungslinse und einer Sammellinse.

DE 10 2015 007 142 A1 offenbart eine Messvorrichtung für ein Laserbearbeitungssystem. Die Messvorrichtung umfasst eine verlagerbare Kollimationslinse die zwischen der Transportfaser eines Messarms und einem Werkstück in dem Messarm angeordnet ist.

US 2013/1489925 offenbart ein Lasersystem mit einer Verschiebevorrichtung, die eine kollimierende und eine fokussierende Linse und aufweist und eine verschiebbare Linse, die einen Laserstrahl lateral verschieben kann.

US 2005/0259306 A1 offenbart ein zweidimensionales optisches Scan-System, das einen optischen Strahl über einen vorgegebenen Bereich lenken kann, um eine zweidimensionale Anzeige zu erzeugen.

US 2015/283613 A1 offenbart ein Verfahren zum Schweißen eines Werkstücks mittels eines Hochenergiestrahls, der ein Laserstrahl sein kann und eine Vorrichtung, die das Verfahren implementiert.

### Offenbarung der Erfindung

Es ist eine Aufgabe der vorliegenden Offenbarung, eine Vorrichtung und ein Verfahren zur Abstandsmessung für ein Laserbearbeitungssystem sowie ein Laserbearbeitungssystem bereitzustellen, die eine Abstandsmessung, wie beispielsweise eine Tiefenmessung der Dampfkapillare, eine Topographiemessung einer Stoßgeometrie oder einer Nahtoberraupe, o.ä., mit hoher Präzession erlauben.

Diese Aufgabe wird durch den Gegenstand der unabhängigen Ansprüche gelöst. Vorteilhafte Ausgestaltungen der Erfindung sind in den Unteransprüchen angegeben.

Gemäß Ausführungsformen der vorliegenden Offenbarung ist eine Vorrichtung zur Abstandsmessung für ein Laserbearbeitungssystem angegeben. Die Vorrichtung umfasst eine Kollimator-Optik, die eine optische Achse definiert und eingerichtet ist, um einen optischen Strahl zu kollimieren, eine Ablenk-Optik, wobei die Ablenk-Optik wenigstens ein transmissives optisches Element umfasst, das bezüglich der optischen Achse verschiebbar ist, um den kollimierten optischen Strahl von der optischen Achse abzulenken. Die Vorrichtung umfasst eine Fokussier-Optik , die eingerichtet ist, um den abgelenkten optischen Strahl auf ein Werkstück zu fokussieren. Der optische Strahl ist ein optischer Messstrahl . Die erfindungsgemäße Vorrichtung zur Abstandsmessung für ein Laserbearbeitungssystem umfasst : eine Kollimator-Optik, die eine optische Achse (201) definiert und eingerichtet ist, um einen optischen Messstrahl zu kollimieren; und eine Ablenk-Optik, wobei die Ablenk-Optik wenigstens ein transmissives optisches Element umfasst, das bezüglich der optischen Achse verschiebbar ist, um den kollimierten optischen Messstrahl von der optischen Achse abzulenken; wobei die Ablenk-Optik im Strahlengang vor einer Fokussier-Optik angeordnet ist, die eingerichtet ist, um den abgelenkten optischen Messstrahl auf ein Werkstück zu fokussieren. kann im Strahlengang vor der Fokussier-Optik zum Fokussieren des abgelenkten optischen Messstrahls auf das Werkstück angeordnet sein. Hierbei kann die Fokussier-Optik Teil der Vorrichtung sein, oder Teil des Laserbearbeitungssystems.

Das wenigstens eine verschiebbare transmissive optische Element kann im Wesentlichen quer bzw. senkrecht zur optischen Achse verschiebbar sein. Die Ablenk-Optik kann zusätzlich wenigstens ein feststehendes transmissives optisches Element umfassen. Das wenigstens eine transmissive optische Element kann eine plankonkave Linse und/oder eine plankonvexe Linse und/oder eine asphärische oder sphärische Linse umfassen oder sein. Das wenigstens eine transmissive optische Element umfasst ein erstes transmissives optisches Element und ein zweites transmissives optisches Element . Hierbei kann das erste transmissive optische Element im Strahlengang vor dem zweiten transmissiven Element angeordnet sein. Das erste transmissive optische Element kann eine plankonkave Linse sein und das zweite transmissive optische Element kann eine plankonvexe Linse sein. Alternativ kann das erste transmissive optische Element eine plankonvexe Linse sein, und das zweite transmissive optische Element eine plankonkave Linse. Die plankonkave Linse kann einen ersten Radius aufweisen und die plankonvexe Linse einen zweiten Radius, wobei der erste Radius und der zweite Radius im Wesentlichen gleich sind. Der erste Radius und/oder der zweite Radius kann im Bereich von 20 bis 2000 mm liegen, insbesondere kann der erste Radius und/oder der zweite Radius etwa 200 mm sein. Die transmissiven optischen Elemente können entweder aus dem gleichen optischen Material, oder aus unterschiedlichen optischen Materialien bestehen.

Das erste transmissive optische Element und das zweite transmissive optische Element können bezüglich einander verschiebbar sein. Das erste oder das zweite transmissive optische Element kann bezüglich der optischen Achse verschiebbar sein. Das andere von dem ersten und zweiten transmissiven optischen Element kann im Wesentlichen ortsfest bezüglich der optischen Achse sein. Es können aber auch sowohl das erste transmissive optische Element als auch das zweite transmissive optische Element bezüglich der optischen Achse verschiebbar sein.

Die Ablenk-Optik bzw. das wenigstens eine transmissive optische Element kann eingerichtet sein, um Abbildungsfehler des optischen Messstrahls auf dem Werkstück zu kompensieren. Insbesondere kann die Ablenk-Optik bzw. das wenigstens eine transmissive optische Element eingerichtet sein, um einen Abbildungsfehler einer Fokussier-Optik zu kompensieren.

Die Vorrichtung umfasst ein Kohärenz-Interferometer oder ein optisches Kohärenztomograph.

Gemäß der Erfindung ist ein Laserbearbeitungssystem angegeben. Das Laserbearbeitungssystem umfasst eine Laservorrichtung zum Erzeugen eines Bearbeitungsstrahls, wobei die Laservorrichtung eingerichtet ist, um den Bearbeitungsstrahl auf einen Bearbeitungsbereich eines Werkstücks zu lenken, und die Vorrichtung zur Abstandsmessung gemäß den hier beschriebenen Ausführungsformen. Die Laservorrichtung kann eine Kollimator-Optik zum Kollimieren des Bearbeitungsstrahls und/oder eine Fokussier-Optik zum Fokussieren des Bearbeitungsstrahls auf das Werkstück umfassen. Die Fokussier-Optik kann auch eingerichtet sein, den abgelenkten Messstrahl auf das Werkstück zu fokussieren. Die optische Achse der Vorrichtung zur Abstandsmessung bzw. der Ablenk-Optik kann mit einer optischen Achse der Laservorrichtung übereinstimmen.

Der Bearbeitungsstrahl und der optische Messstrahl können zumindest streckenweise koaxial sein. Insbesondere kann der Bearbeitungsstrahl und der optische Messstrahl zumindest streckenweise koaxial überlagert sein.

Die Vorrichtung kann eingerichtet sein, um den optischen Messstrahl bezüglich einer Bearbeitungsrichtung bzw. Vorschubrichtung des Bearbeitungsstrahls auf dem Werkstück vor dem Bearbeitungsstrahl, d.h. auf einen noch zu bearbeitenden Bereich des Werkstücks, nach dem Bearbeitungsstrahl, d.h. auf einen schon bearbeiteten Bereich des Werkstücks, oder am Ort des Bearbeitungsstrahls bereitzustellen.

Gemäß anderen Ausführungsformen ist ein Verfahren zur Abstandsmessung für ein Laserbearbeitungssystem angegeben. Das Verfahren umfasst ein Kollimieren eines optischen Messstrahls, ein Ablenken des kollimierten optischen Messstrahls durch Verschieben wenigstens eines transmissiven optischen Elements, und ein Fokussieren des abgelenkten optischen Messstrahls auf ein Werkstück.

Das Verfahren umfasst : ein Bestimmen einer Tiefe oder eines Tiefenprofils einer Dampfkapillare auf dem Werkstück und/oder einer Topographie des Werkstücks unter Verwendung des vom Werkstück reflektierten Messstrahls. Bevorzugte, optionale Ausführungsformen und besondere Aspekte der Offenbarung ergeben sich aus den abhängigen Ansprüchen, den Zeichnungen und der vorliegenden Beschreibung.

Erfindungsgemäß wird in den kollimierten Strahlengang des optischen Messstrahls wenigstens ein transmissives optisches Element eingefügt, das es erlaubt, den kollimierten optischen Messstrahl von seiner optischen Achse abzulenken und gleichzeitig die Abbildungsfehler, die beispielsweise an der Fokussier-Optik entstehen, zu kompensieren. Die Divergenz des optischen Messstrahls wird dabei nicht oder nur geringfügig beeinflusst. Der optische Messstrahl verläuft also auch nach dem transmissiven optischen Element zur Strahlablenkung kollimiert. Damit kann der Messstrahl, der durch die Fokuslinse des hochenergetischen Bearbeitungsstrahls verläuft, lateral abgelenkt werden, ohne dass dabei Abbildungsfehler im Bereich der Werkstückoberfläche entstehen. Zudem kann die Präzision oder die Positioniergenauigkeit, mit der der Strahl abgelenkt werden kann, erhöht werden. Eine Abstandsmessung, wie beispielsweise eine Tiefenmessung der Dampfkapillare, kann mit hoher Präzession erfolgen.

### Kurze Beschreibung der Zeichnungen

Ausführungsbeispiele der Offenbarung sind in den Figuren dargestellt und werden im Folgenden näher beschrieben. Es zeigen:
Figur 1 eine schematische Schnittansicht eines Werkstücks (oben) und eine Draufsicht des Werkstücks (unten) zur Darstellung einer Dampfkapillare und eines Messstrahls beim Schweißen gemäß Ausführungsformen der vorliegenden Offenbarung,
Figur 2 eine schematische Darstellung eines Laserbearbeitungssystems gemäß Ausführungsformen der vorliegenden Offenbarung,
Figur 3 eine schematische Darstellung einer Vorrichtung zur Abstandsmessung für ein Laserbearbeitungssystem gemäß Ausführungsformen der vorliegenden Offenbarung,
Figur 4 Messsignale eines Kohärenztomographen, und
Figur 5 einen Vergleich der Durchmesser des Messstrahls auf der Werkstückoberfläche einer herkömmlichen Ablenkvorrichtung (linke Seite) und der erfindungsgemäßen Vorrichtung (rechte Seite).

### Ausführungsformen der Offenbarung

Im Folgenden werden, sofern nicht anders vermerkt, für gleiche und gleichwirkende Elemente gleiche Bezugszeichen verwendet.

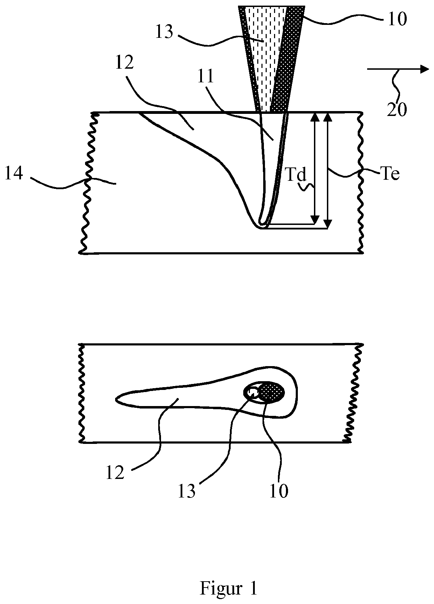

Figur 1 zeigt eine schematische Schnittansicht eines Werkstücks (oben) und eine Draufsicht des Werkstücks (unten) zur Darstellung einer Dampfkapillare und eines Messstrahls beim Schweißen gemäß Ausführungsformen der vorliegenden Offenbarung.

Wie in Figur 1 dargestellt, entsteht beim Lasertiefschweißprozess während eines Schweißvorgangs entlang der Strahlachse des Bearbeitungsstrahls 10 eine Dampfkapillare 11, die auch Keyhole genannt wird, und die von flüssiger Schmelze 12 umgeben ist. Die Tiefe Td der Dampfkapillare, im Folgenden auch Keyholetiefe genannt, steht in Zusammenhang mit der Schweißnaht- oder Einschweißtiefe Te. In Vorschubrichtung gesehen hinter der flüssigen Schmelze 12 befindet sich die erstarrte Schmelze 14.

Um die Einschweißtiefe bzw. die Tiefe der Dampfkapillare 11 beispielweise während des Schweißprozesses zu bestimmen, kann der Messstrahl 13 eines optischen Kohärenztomographen koaxial mit dem Bearbeitungsstrahl 10 überlagert und in die Öffnung der Dampfkapillare 11 fokussiert werden. Das einfallende Licht trifft auf den Boden bzw. das Ende der Dampfkapillare 11, wird dort teilweise reflektiert und gelangt zurück in den optischen Kohärenztomographen, mit dessen Hilfe die Tiefe Td der Dampfkapillare 11 mit hoher Präzision gemessen werden kann.

Aufgrund der sehr spitz zulaufenden Form der Dampfkapillare 11 wird der Messstrahl 13 (das Messlicht) an dessen unterem Ende nur sehr schlecht reflektiert. Weiterhin weist die Öffnung der Dampfkapillare 11 einen geringen Durchmesser auf, in den der Messstrahl 13 fokussiert werden muss. Typische Fokusdurchmesser des hochenergetischen Bearbeitungsstrahls 10 liegen im Bereich von 100 bis 1000 µm. Der Öffnungsdurchmesser der Dampfkapillare 11 kann einen geringeren Durchmesser aufweisen. Es ist daher erstrebenswert, den Messstrahl 13 auf einen Durchmesser zu fokussieren, der kleiner als die Öffnung der Dampfkapillare 11 ist und ihn zusätzlich lateral so auszurichten, dass er vollständig in die Öffnung der Dampfkapillare 11 trifft und sich bis zu deren Boden bzw. Ende ausbreiten kann.

Aufgrund der elliptischen Öffnung und der gekrümmten Form der Dampfkapillare 11 kann der Messstrahl 13 insbesondere bei größeren Vorschubgeschwindigkeiten in den Nachlauf positioniert werden. Ist die laterale Auftreffposition des Messstrahls 13 nicht ideal, so werden nur wenige Daten vom Boden der Dampfkapillare 11 erfasst. Stattdessen werden Abstandsinformationen von höher gelegener Position an der Seitenwand der Dampfkapillare 11 oder sogar von der Oberfläche des Werkstücks geliefert. Die Bestimmung der Tiefe Td der Dampfkapillare 11 wird dadurch erschwert bzw. ist nicht mehr möglich. Aus diesem Grund ist sowohl die Größe des Messstrahls 13 an der Werkstückoberfläche als auch die laterale Auftreffposition entscheidend für eine fehlerfreie und präzise Messung der Tiefe Td der Dampfkapillare 11.

Um die ideale Auftreffposition des Messstrahls 13 zu finden, kann der Messstrahl 13 während eines Bearbeitungsvorgangs in einem Bereich um die Auftreffposition des hochenergetischen Bearbeitungsstrahls 10 in seiner Position lateral verlagert werden. Die Verlagerung des Messstrahls 13 erfolgt durch Ablenkelemente im Strahlengang des Messstrahls 13. Dabei kann die Ablenkung des Messstrahls 13 vor der koaxialen Überlagerung von Messstrahl 13 und Bearbeitungsstrahl 10 stattfinden, damit der hochenergetische Bearbeitungsstrahl 10 von der Ablenkung unberührt bleibt. Anders gesagt soll eine Relativbewegung zwischen Bearbeitungsstrahl 10 und Messstrahl 13 stattfinden. Damit sich die laterale Lage des Messstrahls 13 in der Bearbeitungsebene ändert, wird der Messstrahl 13 vor dem Auftreffen auf die Fokuslinse von seiner optischen Achse abgelenkt. Der Messstrahl 13 und die optische Achse nehmen dann einen Winkel von größer als 0° ein. Als nicht durch die Ansprüche gestützte Alternative kann die Relativbewegung zwischen Bearbeitungsstrahl 10 und Messstrahl 13 auch durch Ablenkung des Bearbeitungsstrahls 10 erreicht werden. Hierzu kann die Ablenk-Optik 220 in den Strahlengang des kollimierten Bearbeitungsstrahls 10 vor der Fokussier-Optik 130 angeordnet werden.

Zum Ablenken eines optischen Strahls von seiner optischen Achse ist es bekannt, Elemente in der Kollimationseinheit zu verlagern, wie z.B. das Ende des Lichtleiters quer zur optischen Achse (vgl. WO 2016/062636 A1). Alternativ kann die Kollimierlinse oder eine weitere Linse im divergenten Strahlengang quer zur optischen Achse verlagert werden. Weiterhin können ablenkende Elemente nach der Kollimationseinheit in den Strahlengang integriert werden, wie beispielsweise an Galvanometer-Motoren befestigte Ablenkspiegel (Galvo-Scanner), um den Ablenkwinkel zu verändern.

Um die ideale Auftreffposition des Messstrahls auf der Werkstückoberfläche zu finden und anschließend auch über einen langen Zeitraum halten zu können, ist ein präzises System zur Ablenkung notwendig. Hier spielt die Positioniergenauigkeit, die Reproduzierbarkeit aber auch der Positionsdrift eine entscheidende Rolle. Da bei der Strahlablenkung der Messstrahl nicht mehr auf der optischen Achse verläuft, erfährt der Messstrahl Abbildungsfehler (Aberrationen), die den Durchmesser des Messstrahls im Bereich des Fokus vergrößern. Einige dieser Fehler, insbesondere bei monochromatischem Licht, sind: Astigmatismus, Koma, Bildfeldwölbung, Verzeichnung. Aufgrund der koaxialen Überlagerung von Messstrahl und Bearbeitungsstrahl kann zur Fokussierung eine gemeinsame Fokussier-Optik (auch als "Fokusoptik bezeichnet") verwendet werden. Diese Optik ist im Allgemeinen nicht für Strahlen ausgelegt, die abseits der optischen Achse verlaufen. Gründe hierfür sind:
- Ein optischer Kohärenztomograph wird nachträglich an einem vorhandenen Bearbeitungskopf installiert. Der hochenergetische Bearbeitungsstrahl verläuft im Allgemeinen axial, so dass keine Aberrationen durch schräg einfallende Strahlen auftreten und die Optik nicht darauf ausgelegt ist.
- Die Fokussier-Optik ist dem hochenergetischen Bearbeitungsstrahl ausgesetzt und erfordert hohe Anforderungen an Sauberkeit und Materialgüte. Aus Kostengründen ist es vorteilhaft, diese Optik so einfach als möglich zu halten.

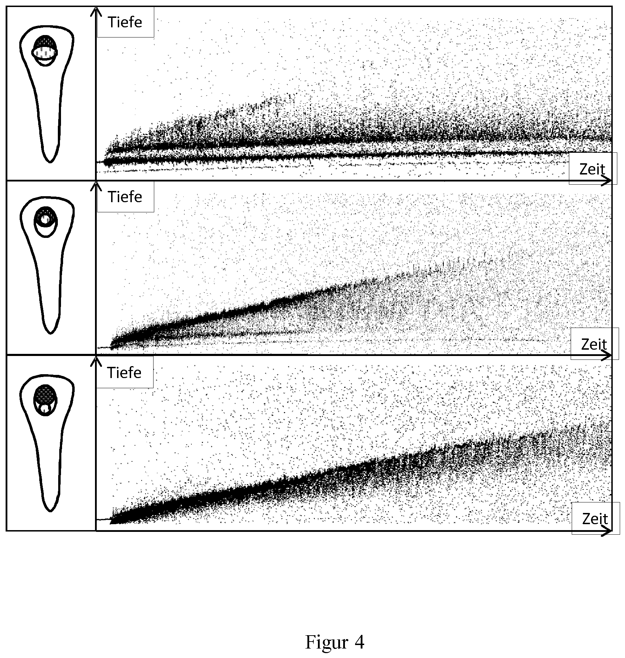

Der Messstrahl des Kohärenztomographen wird also, abhängig von der gewünschten Auftreffposition auf dem Werkstück, schräg durch die Fokussier-Optik laufen, wodurch Abbildungsfehler entstehen. Dies hat zur Folge, dass der Durchmesser des Messstrahls auf der Bauteiloberfläche mit zunehmender Ablenkung aufgrund der Abbildungsfehler größer wird. Liegt die ideale Position zur Tiefenmessung nicht auf der optischen Achse, so kann der Messstrahl unter Umständen nicht mehr vollständig in die Dampfkapillare fokussiert werden (vgl. Figur 4 oben).

Um die oben genannten Nachteile zu vermeiden, wird erfindungsgemäß wenigstens ein verschiebbares transmissives optisches Element in den kollimierten Strahlengang des optischen Messstrahls 13 eingefügt, das es erlaubt, den kollimierten optischen Messstrahl von seiner optischen Achse abzulenken und gleichzeitig die Abbildungsfehler, die beispielsweise an der Fokussier-Optik entstehen, zu kompensieren. Die Divergenz des optischen Messstrahls 13 wird dabei nicht oder nur geringfügig beeinflusst. Der optische Messstrahl 13 verläuft also auch nach den optischen Elementen zur Strahlablenkung im Wesentlichen kollimiert. Die Größe des Messstrahls 13 an der Werkstückoberfläche und die laterale Auftreffposition können präzise eingestellt werden, wodurch eine fehlerfreie und präzise Messung der Tiefe Td der Dampfkapillare 11 möglich ist.

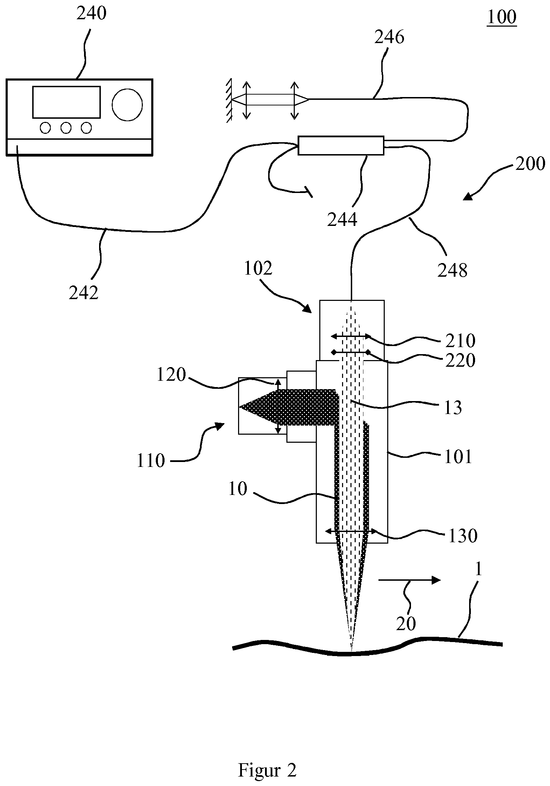

Figur 2 zeigt eine schematische Darstellung eines Laserbearbeitungssystems 100 gemäß Ausführungsformen der vorliegenden Offenbarung. Das Laserbearbeitungssystem 100 kann einen Laserschweißkopf 101 umfassen, und insbesondere einen Laserschweißkopf zum Lasertiefschweißen.

Das Laserbearbeitungssystem 100 umfasst eine Laservorrichtung 110 zum Erzeugen eines Bearbeitungsstrahls 10 (auch als "Laserstrahl" oder "Bearbeitungslaserstrahl" bezeichnet) und die Vorrichtung 200 zur Abstandsmessung gemäß den hier beschriebenen Ausführungsformen. Die Laservorrichtung 110 ist eingerichtet, um den Bearbeitungsstrahl 10 auf einen Bearbeitungsbereich eines Werkstücks 1 zu lenken. Die Laservorrichtung 110 kann eine Kollimatorlinse 120 zur Kollimation des Bearbeitungsstrahls 10 aufweisen. Die Laservorrichtung 110 aufweist eine Fokussier-Optik 130 zum Fokussieren des Bearbeitungsstrahls 10 auf dem Werkstück 1 .

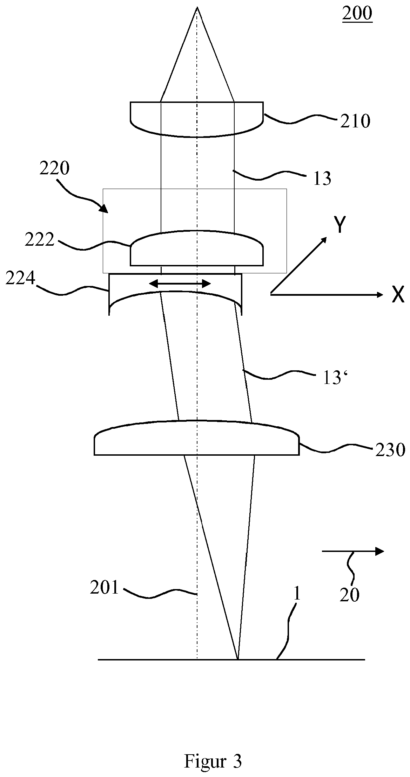

Die Vorrichtung 200 zur Abstandsmessung umfasst eine Kollimator-Optik 210, die eingerichtet ist, um einen optischen Messstrahl 13 zu kollimieren, und eine Ablenk-Optik 220, wobei die Ablenk-Optik 220 wenigstens ein transmissives optisches Element umfasst, das bezüglich der optischen Achse verschiebbar ist, um den kollimierten optischen Messstrahl 13 von der optischen Achse abzulenken. Die optische Achse wird hier durch eine Lichtleitfaser für den optischen Messstrahl 13 oder durch die Kollimator-Optik 210 definiert. Zum Fokussieren des abgelenkten optischen Messstrahls 13 auf dem Werkstück 1 kann die Fokussier-Optik 130 der Laservorrichtung 10 verwendet werden. Die Vorrichtung 200 zur Abstandsmessung kann aber auch eine zusätzliche Fokussier-Optik 230 umfassen (siehe Figur 3). Gemäß Ausführungsformen kann die Vorrichtung 200 ein Kohärenz-Interferometer oder einen optischen Kohärenztomograph umfassen oder ein Kohärenz-Interferometer oder optischer Kohärenztomograph sein.

Ein Verfahren zur Abstandsmessung für ein Laserbearbeitungssystem gemäß den hier beschrieben Ausführungsformen kann ein Kollimieren eines optischen Messstrahls, ein Ablenken des kollimierten optischen Messstrahls durch Verschieben wenigstens eines transmissiven optischen Elements, und ein Fokussieren des abgelenkten optischen Messstrahls auf ein Werkstück umfassen. Das Verfahren kann durch die hier offenbarte Vorrichtung zur Abstandsmessung implementiert werden.

In einigen Ausführungsformen können der Bearbeitungsstrahl 10 und der optische Messstrahl 13 zumindest streckenweise koaxial sein, und können insbesondere zumindest streckenweise koaxial überlagert sein. Beispielsweise kann die Vorrichtung 200 eingerichtet sein, um den optischen Messstrahl 13 in einen Strahlengang der Laservorrichtung 110 einzukoppeln. Die Zusammenführung des optischen Messstrahls 13 und des Bearbeitungsstrahls 10 kann nach der Ablenk-Optik 220 und vor der Fokussier-Optik 130 erfolgen.

In typischen Ausführungsformen, die mit anderen hier beschriebenen Ausführungsformen kombiniert werden können, sind die Kollimator-Optik 210, die Ablenk-Optik 220 und die Fokussier-Optik 130 bzw. 230 in den Schweißkopf 101 integriert. Beispielsweise kann der Schweißkopf 101 ein Kollimatormodul 102 umfassen, das in den Schweißkopf 101 integriert oder am Schweißkopf 101 montiert ist. Das Kollimatormodul 102 kann die Kollimator-Optik 210 und die Ablenk-Optik 220 umfassen. Die Fokussier-Optik 130 kann eine gemeinsame Fokussier-Optik, wie beispielsweise eine Fokuslinse, für den Bearbeitungsstrahl 10 und den Messstrahl 13 sein.

Das Laserbearbeitungssystem 100 oder Teile davon, wie beispielsweise der Schweißkopf 101, kann gemäß Ausführungsformen entlang einer Bearbeitungsrichtung 20 bewegbar sein. Die Bearbeitungsrichtung 20 kann eine Schweißrichtung und/oder eine Bewegungsrichtung des Laserbearbeitungssystems 100, wie beispielsweise des Schweißkopfes 101, bezüglich des Werkstücks 1 sein. Insbesondere kann die Bearbeitungsrichtung 20 eine horizontale Richtung sein. Die Bearbeitungsrichtung 20 kann auch als "Vorschubrichtung" bezeichnet werden.

In typischen Ausführungsformen basiert die Bestimmung oder Messung der Tiefe der Dampfkapillare in Echtzeit auf dem Prinzip der optischen Kohärenztomographie, die sich unter Zuhilfenahme eines Interferometers die Kohärenzeigenschaften von Lichts zunutze macht. Insbesondere kann die Vorrichtung 200 ein Kohärenz-Interferometer oder einen optischen Kohärenztomograph umfassen. Wie in Figur 2 gezeigt, kann die Vorrichtung 200 eine Auswerteeinheit 240 mit einer breitbandigen Lichtquelle (z.B. einer Superlumineszenzdiode, SLD) umfassen, die das Messlicht in einen Lichtwellenleiter 242 koppelt. In einem Strahlteiler 244, der vorzugsweise einen Faserkoppler aufweist, wird das Messlicht in einen Referenzarm 246 und einen Messarm aufgespalten, der über einen Lichtwellenleiter 248 in den Schweißkopf 101 führt.

Die Kollimator-Optik 210 (auch als "Kollimatormodul" bezeichnet) dient dazu, das aus dem Lichtwellenleiter 248 austretende Messlicht (optischer Messstrahl 13) zu kollimieren. Gemäß einigen Ausführungsformen kann der optische Messstrahl 13 im Schweißkopf 101 mit dem Bearbeitungsstrahl 10 koaxial überlagert werden. Anschließend können der Bearbeitungslaserstrahl 10 und der optische Messstrahl 13 durch die Fokussier-Optik 130, die eine gemeinsame Linse oder Fokussierlinse sein kann, auf das Werkstück 1 fokussiert werden. Die Auftreffposition des optischen Messstrahls 13 kann dabei durch die Ablenk-Optik 220 so eingestellt werden, dass das Messlicht in die Dampfkapillare gelenkt wird. Das aus der Dampfkapillare zurückreflektierte Messlicht wird durch die Fokussier-Optik 130 auf die Austritts- /Eintrittsfläche des Lichtwellenleiters 248 abgebildet, im Faserkoppler 244 mit dem zurückreflektierten Licht aus dem Referenzarm 246 überlagert und anschließend zurück in die Auswerteeinheit 240 gelenkt. Das überlagerte Licht enthält Informationen über den Weglängenunterschied zwischen dem Referenzarm 246 und dem Messarm. Diese Informationen werden in der Auswerteeinheit 240 ausgewertet, wodurch der Benutzer Informationen über den Abstand zwischen Boden der Dampfkapillare und beispielsweise dem Schweißkopf 101 erhält.

Gemäß Ausführungsformen kann die Vorrichtung 200 eingerichtet sein, um mittels des optischen Messstrahls 10 einen Abstand zum Werkstück 1 beispielsweise bezüglich eines durch die Vorrichtung 200 definierten Referenzpunkts zu messen. Insbesondere kann die Vorrichtung 200 eingerichtet sein, um eine Abstandsänderung zu messen, während sich der Schweißkopf 101 entlang der Bearbeitungsrichtung 20 bewegt. Hierdurch kann beispielsweise ein Tiefenprofil der Dampfkapillare erstellt werden. Alternativ oder zusätzlich zur Messung der Tiefe der Dampfkapillare kann eine Topographiemessung des Werkstücks 1, beispielsweise der Schweißnaht, erfolgen. Die Topographiemessung kann gemäß Ausführungsformen zur Fehlerdetektion und/oder Regelung einer oder mehrerer Prozesseingangsgrößen verwendet werden. Die Prozesseingangsgrößen können z.B. eine Bearbeitungsgeschwindigkeit, eine Laserleistung, ein Laserfokus, und/oder Betriebsparameter der Laservorrichtung umfassen.

In einigen Ausführungsformen kann eine Topographiemessung im Bereich um die Bearbeitungsposition durchgeführt werden. Hierzu kann der optische Messstrahl 13 lateral verschoben und gleichzeitig Höheninformationen aufgenommen werden. Hierdurch entsteht ein Höhenprofil. Interessante Höhenprofile bei der Laserbearbeitung können beispielswese Topographien im Vorlauf quer zur Vorschubrichtung sein, um beispielsweise eine Stoßgeometrie zu erkennen, die verschweißt werden soll. Weiterhin kann eine quer zur Vorschubrichtung verlaufende Topographie im Nachlauf gemessen werden, um das Höhenprofil der beim Schweißprozess entstehenden Nahtoberraupe zu erfassen.

Die Größe des optischen Messstrahls 13 auf der Bauteiloberfläche bestimmt hierbei die laterale Auflösung bei der Topographiemessung. Erfährt der optische Messstrahl 13 durch die Auslenkung Abbildungsfehler, so nimmt zum einen die laterale Auflösung ab, zum anderen bleibt die Messfleckgröße und damit die Auflösung bei einem Scan durch die optische Achse nicht konstant. Dies kann durch die erfindungsgemäße Ablenk-Optik 220 verhindert werden.

Die erfindungsgemäße Vorrichtung 200 ist eine optische Abstandsmessvorrichtung für ein Laserbearbeitungssystem zum Durchführen von Abstandsmessungen beispielsweise vor, während und nach der Laserbearbeitung. Die Laserbearbeitung erfolgt durch den Bearbeitungsstrahl, der ein hochenergetischer Bearbeitungsstrahl sein kann. Das Messsystem, das als optischer Kohärenztomograph ausgebildet sein kann, ist mit dem Bearbeitungssystem verbunden und/oder zumindest teilweise in das Bearbeitungssystem integriert. Der optische Messstrahl, der ein niederenergetischer Messstrahl sein kann, kann über einen Lichtleiter dem Bearbeitungskopf zugeführt, kollimiert und anschließend dem hochenergetischen Bearbeitungsstrahl koaxial überlagert und durch eine gemeinsame Fokusoptik auf das zu bearbeitende Werkstück fokussiert werden. Die Vorrichtung 200 beinhaltet ein oder mehrere verschiebbare transmissive optische Elemente, mit deren Hilfe die laterale Auftreffposition des Messstrahls auf dem Werkstück 1 in einem Bereich um den hochenergetischen Bearbeitungsstrahl verlagert werden kann. Dies erlaubt eine Abstandsmessung, wie beispielsweise eine Tiefenmessung der Dampfkapillare, mit hoher Präzession.

Figur 3 zeigt eine schematische Darstellung einer Vorrichtung 200 zur Abstandsmessung für ein Laserbearbeitungssystem gemäß Ausführungsformen der vorliegenden Offenbarung.

Im Fall von Schweißoptiken werden häufig sphärische oder asphärische Fokuslinsen eingesetzt. Fällt das Messlicht nicht senkrecht, sondern unter einem Winkel auf die Fokuslinse, so treten Abbildungsfehler auf. Der dominante Fehler, der signifikant zur Vergrößerung des Messflecks in der Bearbeitungsebene beiträgt, ist der Abbildungsfehler Koma. Hier werden die schräg einfallenden Strahlen nicht alle gleichmäßig gebrochen, weshalb sie sich in der Fokusebene nicht wieder in einem Punkt vereinen. Stattdessen entsteht ein Punkt mit einem Schweif, der zum Rand hingerichtet ist, also weg von der optischen Achse.

In den Strahlengang des kollimierten optischen Messstrahls 13 ist die Ablenk-Optik 220 mit dem wenigstens einen transmissiven optischen Element eingefügt. Die Ablenk-Optik 220 kann eingerichtet sein, um Abbildungsfehler des optischen Messstrahls 13 auf dem Werkstück 1 zu kompensieren. Insbesondere kann die Ablenk-Optik 220 eingerichtet sein, um einen Abbildungsfehler der Fokussier-Optik 230 zu kompensieren. Die Divergenz des optischen Messstrahls 13 wird dabei nicht oder nur geringfügig beeinflusst. Der optische Messstrahl 13 verläuft also auch nach dem wenigstens einen transmissiven optischen Element zur Strahlablenkung nahezu kollimiert.

Da es sich bei dem System zur Strahlablenkung und Abbildungsfehlerkompensation um transmissive Elemente handelt, kann der gesamte optische Messstrahl, von Austritt aus dem Lichtleiter bis zum Auftreffen auf dem Werkstück oder Bauteil, in einer Achse verlaufen. Somit wird das gesamte System kompakter. Herkömmliche Galvanometer-Scanner lenken den Messstrahl an jedem Spiegel um, so dass der Aufbau mehr Volumen einnimmt. Durch die lineare Bewegung einer Verschiebung, anstelle einer Verkippung, Drehung oder ähnlichem, kann zusätzlicher Platz entlang der optischen Achse eingespart werden.

Das wenigstens eine transmissive optische Element ist eine plankonkave Linse (Zerstreuungslinse) oder eine plankonvexe Linse (Sammellinse). Solche Linsen weisen eine einfache Bauform auf und sind kostengünstig herzustellen.

Das wenigstens eine transmissive optische Element umfasst ein erstes transmissives optische Element 222 und ein zweites transmissives 224 optische Element. Beispielsweise kann das erste transmissive optische Element 222 eine plankonvexe Linse sein und das zweite transmissive optische Element 224 kann eine plankonkave Linse sein, wie im Beispiel der Figur 3 dargestellt ist. In weiteren Ausführungsformen kann das erste transmissive optische Element eine plankonkave Linse und das zweite transmissive optische Element eine plankonvexe Linse sein. Insbesondere kann die Reihenfolge der Linsen im Strahlengang des Messstrahls beliebig sein.

Gemäß Ausführungsformen sind die ebenen (planen) Flächen der plankonkaven Linse und der plankonvexen Linse einander zugewandt. Anders gesagt befinden sich die gekrümmten Flächen, also die konkav gekrümmte Fläche der plankonkaven Linse und die konvex gekrümmte Fläche der plankonvexen Linse, auf den voneinander abgewandelten Seiten der Linsen.

Die plankonkave Linse kann einen ersten Radius aufweisen und die plankonvexe Linse kann einen zweiten Radius aufweisen. Der erste Radius und der zweite Radius sind im Wesentlichen gleich. Beispielsweise können der erste Radius und der zweite Radius im Bereich von 20 bis 2000 mm sein. Typischerweise sind der erste Radius und der zweite Radius etwas 200 mm. Die Radien der beiden Linsen können identisch oder nahezu identisch sein, besitzen aber ein umgekehrtes Vorzeichen (Sammellinse und Zerstreuungslinse). Sind die Brennweiten groß genug, dann heben sich deren Wirkungen gegenseitig auf.

Der Linsenradius der plankonkaven und plankonvexen Linse beeinflusst, in welchem Ausmaß Abbildungsfehler kompensiert werden. Weiterhin beeinflusst der Radius, wie weit der kollimierte optische Messstrahl bei gegebener Auslenkung der Linse abgelenkt wird. Über den Linsenradius kann somit zusätzlich das "Übersetzungsverhältnis" zwischen mechanischer Auslenkung der Linse und Strahlablenkung auf der Werkstückoberfläche beeinflusst werden. Damit können die Strahlablenkung und somit auch die Präzision und Reproduzierbarkeit auf die jeweiligen Umstände angepasst werden. Im Vergleich zu andere Ablenkmöglichkeiten, wie bewegten Spiegeln oder dem Verschieben des Faserendes, weist die erfindungsgemäße Vorrichtung eine deutlich geringere Justageempfindlichkeit auf, wodurch die Präzision zur Ausrichtung auf die ideale Position zur Messung der Tiefe der Dampfkapillare signifikant verbessert wird. Somit können kostengünstige Antriebe mit einer geringeren Präzision zum lateralen Verlagern beispielsweise der plankonkaven Linse verwendet werden, ohne dass die notwendige Positioniergenauigkeit des optischen Messstrahls verloren geht.

Wenigstens ein transmissives optisches Element der Ablenk-Optik 220 ist bezüglich der optischen Achse 201 verschiebbar, um den kollimierten optischen Messstrahl 13 von der optischen Achse 201 abzulenken. Beispielsweise kann das transmissive optische Element lateral und/oder im Wesentlichen senkrecht zur optischen Achse 201 verschiebbar sein. Der Begriff "verschiebbar" bedeutet eine Translation oder Versetzung des transmissiven optischen Elements, im Unterschied zu einer Rotation oder Verkippung. Typischerweise umfasst die Vorrichtung 200 wenigstens einen Aktuator (nicht gezeigt), der eingerichtet ist, um das wenigstens eine optische Element bezüglich der optischen Achse 201 zu verschieben.

Gemäß Ausführungsformen sind das erste transmissive optische Element 222 und das zweite transmissive optische Element 224 zueinander verschiebbar. Beispielsweise kann das erste transmissive optische Element 222 bezüglich der optischen Achse 201 verschiebbar sein und das zweite transmissive optische Element 224 kann im Wesentlichen ortsfest bezüglich der optischen Achse sein 201. In anderen Ausführungsformen, wie im Beispiel der Figur 3 dargestellt ist, kann das zweite transmissive optische Element 224 bezüglich der optischen Achse 201 verschiebbar sein und das erste transmissive optische Element 222 kann im Wesentlichen ortsfest bezüglich der optischen Achse 201 sein. In weiteren Ausführungsformen können sowohl das erste transmissive optische Element 222 als auch das zweite transmissive optische Element 224 bezüglich der optischen Achse 201 verschiebbar sein.

Durch laterales Verschieben beispielsweise der plankonkaven Linse lässt sich der kollimierte optische Messstrahl 13 um einen Winkel und eine Richtung auslenken, wodurch der optische Messstrahl in der Bearbeitungsebene verlagert werden kann.

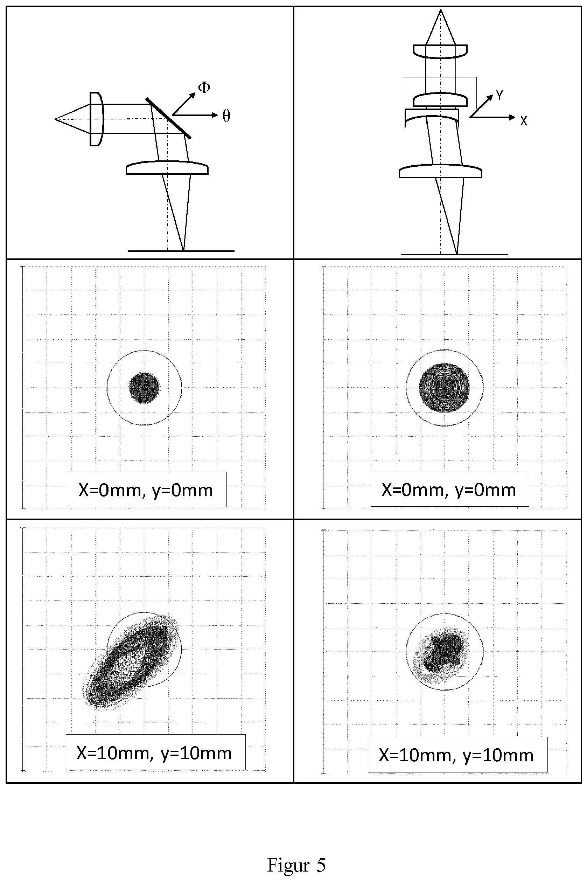

Neben der Ablenkung des kollimierten Strahls erfahren die einzelnen Strahlen zusätzlich eine ungleichmäßige Brechung. Strahlen, die in der Fokuslinse durch den schrägen Einfall schwächer gebrochen werden und den Schweif bzw. das Koma verursachen, werden in der plankonkaven Linse so gebrochen, dass die schwächere Brechung der Fokuslinse aufgehoben wird und sich die Strahlen in der Fokusebene (Werkstückoberfläche) wieder in einem Punkt treffen. Dies führt zu einer beugungsbegrenzten Abbildung. Die Abbildungsfehler der Fokuslinse können somit durch die plankonkave Linse kompensiert werden. Der Messstrahldurchmesser kann in der Bearbeitungsebene unabhängig von der Auslenkung nahezu unverändert bleiben (siehe Figur 5).

Gemäß Ausführungsformen der vorliegenden Offenbarung kann der Messstrahl während der Laserbearbeitung in seiner Auftreffposition verlagert werden. Beispielsweise kann die Vorrichtung 200 eingerichtet sein, um den Messstrahl bezüglich einer Bearbeitungsrichtung 20 des Bearbeitungsstrahls auf dem Werkstück 1 vor dem Bearbeitungsstrahl, nach dem Bearbeitungsstrahl, oder am Ort des Bearbeitungsstrahls bereitzustellen. Mögliche Messpositionen umfassen beispielsweise: In Vorschubrichtung des hochenergetischen Bearbeitungsstrahls gesehen vor der Bearbeitung, im Bearbeitungsbereich und hinter der Bearbeitung. Weiterhin kann der optische Messstrahl 13 während der Bearbeitung quer und längs zur Vorschubrichtung durch den Auftreffpunkt des hochenergetischen Bearbeitungsstrahls verschoben werden. Somit lassen sich Tiefenprofile der bei der Bearbeitung mit einem hochenergetischen Bearbeitungsstrahl auftretenden Dampfkapillare erstellen.

In manchen Ausführungsformen kann die Vorrichtung 200 eingerichtet sein, um einen Abstand zu einem Bereich des Werkstücks 10 zu messen, der benachbart zum Bearbeitungsbereich liegt. Der Bereich kann eine unbearbeitete Oberfläche des Werkstücks 1 sein. Beispielsweise kann eine Topographiemessung im Vorlauf (z.B. eine z-Lage der Werkstückoberfläche) als Referenzmessung und/oder zur Prozessführung verwendet werden.

Figur 4 zeigt Messsignale eines Kohärenztomographen. Mit zunehmender Zeit wird die Energie des hochenergetischen Bearbeitungsstrahls gesteigert, weshalb die Tiefe der Dampfkapillare zunimmt. Oben in Figur 3 weist der optische Messstrahl Abbildungsfehler auf, wodurch Abstandssignale von der Oberfläche des Werkstücks, von der tiefsten Stelle der Dampfkapillare aber auch von höher gelegenen Positionen erhalten werden. Insbesondere bei großen Tiefen der Dampfkapillare liefert der Kohärenztomograph keine Messdaten mehr vom Boden der Dampfkapillare. In der Mitte in Figur 3 wird der optische Messstrahl ohne Abbildungsfehler auf die Werkstückoberfläche fokussiert. Allerdings trifft er nicht auf die ideale laterale Position, weshalb insbesondere bei großen Einschweißtiefen nicht genügend Abstandssignale vom Boden der Dampfkapillare erfasst werden. Eine Messung an einer nicht idealen lateralen Position kann auftreten, wenn der Messstrahl nicht präzise genug positioniert werden kann. Unten in Figur 3 wird der optische Messstrahl ohne Abbildungsfehler auf die Werkstückoberfläche fokussiert und befindet sich auf der idealen Position zur Erfassung von Abstandssignalen vom Boden der Dampfkapillare. Die Tiefe der Dampfkapillare kann bis zu großen Tiefen gemessen werden.

Figur 5 zeigt einen Vergleich der Durchmesser des optischen Messstrahls auf der Werkstückoberfläche einer herkömmlichen Ablenkvorrichtung (linke Seite) und der erfindungsgemäßen Vorrichtung (rechte Seite). Auf der rechten Seite tritt der optische Messstrahl aus einem Lichtleitkabel aus, wird kollimiert und durchläuft anschließend die erfindungsgemäßen transmissiven optischen Elemente, die einen Linsenradius von 200 mm (Brennweiten f = 400 mm bzw. f = -400 mm) aufweisen. Anschließend wird der Messstrahl durch eine plankonvexe Linse (Fokus-Optik) mit einer Brennweite von f = 300mm fokussiert.

Oben in Figur 5 ist eine schematische Darstellung einer Ablenkvorrichtung durch Spiegeloptiken und durch die erfindungsgemäßen transmissiven optischen Elemente zur Kompensation von Abbildungsfehlern und Erhöhung der Positioniergenauigkeit gezeigt. In der Mitte ist ein simulierter Strahldurchmesser (Raytracing) auf der Werkstückoberfläche im Zentrum des Scanfeldes (optischer Messstrahl verläuft auf der optischen Achse) gezeigt. Der Kreis kennzeichnet das Beugungslimit (theoretisch minimal möglicher Durchmesser des optischen Messstrahls bei gegebener Abbildung). Aufgrund des Beugungslimits besitzen beide Ablenkkonzepte den gleichen Strahldurchmesser. Unten ist ein simulierter Strahldurchmesser auf der Werkstückoberfläche bei ausgelenktem optischen Messstrahl gezeigt. Im Fall der Ablenkung durch Spiegeloptiken ist der optische Messstrahl nicht mehr beugungsbegrenzt und erhält eine elliptische Form. Im Fall der erfindungsgemäßen transmissiven optischen Elemente zur Strahlablenkung bleibt der optische Messstrahl trotz Strahlauslenkung beugungsbegrenzt. Im Zentrum und bei Auslenkung bleibt die Größe des optischen Messstrahls auf der Bauteiloberfläche also unverändert.

## Patentansprüche

1. Laserbearbeitungssystem (100), umfassend:
eine Laservorrichtung (110), die eingerichtet ist, um einen Bearbeitungsstrahl (10) auf einen Bearbeitungsbereich eines Werkstücks (1) zu lenken; und
eine Vorrichtung (200) zur Abstandsmessung, die Vorrichtung (200) umfassend:
eine Kollimator-Optik (120, 210), die eine optische Achse (201) definiert und eingerichtet ist, um einen optischen Messstrahl (13) eines Kohärenz-Interferometers oder eines optischen Kohärenztomographen zu kollimieren;
eine Ablenk-Optik (220), die wenigstens ein transmissives optisches Element (222, 224) umfasst, das bezüglich der optischen Achse (201) verschiebbar ist, um den kollimierten optischen Messstrahl (13) von der optischen Achse (201) abzulenken; und
eine Fokussier-Optik (130, 230), die eingerichtet ist, um den abgelenkten optischen Messstrahl (13') und den Bearbeitungsstrahl (10) auf ein Werkstück (1) zu fokussieren;
wobei die Ablenk-Optik (220) im Strahlengang vor der Fokussier-Optik (130, 230) angeordnet ist;
wobei die Ablenk-Optik (220) ein erstes transmissives optisches Element (222) und ein zweites transmissives optisches Element (224) umfasst, die im Strahlengang hintereinander angeordnet sind und wovon zumindest eines verschiebbar ist,
wobei das erste transmissive optische Element (222) eine plankonkave Linse ist und das zweite transmissive optische Element (224) eine plankonvexe Linse ist, oder wobei das erste transmissive optische Element (222) eine plankonvexe Linse ist und das zweite transmissive optische Element (224) eine plankonkave Linse ist,
wobei die plankonkave Linse einen ersten Radius aufweist und die plankonvexe Linse einen zweiten Radius aufweist, wobei der absolute Wert des ersten Radius und der absolute Wert des zweiten Radius im Wesentlichen gleich sind.

2. Das Laserbearbeitungssystem (100) nach Anspruch 1, wobei das wenigstens eine transmissive optische Element (222, 224) im Wesentlichen senkrecht zur optischen Achse (201) verschiebbar ist.

3. Das Laserbearbeitungssystem (100) nach einem der vorausgehenden Ansprüche, wobei das wenigstens eine transmissive optische Element (222, 224) eine sphärische Linse und/oder eine asphärische Linse umfasst.

4. Das Laserbearbeitungssystem (100) nach einem der vorausgehenden Ansprüche, wobei das erste transmissive optische Element (222) und das zweite transmissive optische Element (224) bezüglich einander verschiebbar sind.

5. Das Laserbearbeitungssystem (100) nach einem der vorausgehenden Ansprüche, wobei das erste transmissive optische Element (222) bezüglich der optischen Achse (201) verschiebbar ist und das zweite transmissive optische Element (224) im Wesentlichen ortsfest bezüglich der optischen Achse (201) ist, oder wobei das zweite transmissive optische Element (224) bezüglich der optischen Achse (201) verschiebbar ist und das erste transmissive optische Element (222) im Wesentlichen ortsfest bezüglich der optischen Achse (201) ist, oder wobei das erste transmissive optische Element (222) und das zweite transmissive optische Element (224) bezüglich der optischen Achse (201) verschiebbar sind.

6. Die Vorrichtung (200) nach einem der vorausgehenden Ansprüche, wobei die Ablenk-Optik (220) eingerichtet ist, um Abbildungsfehler des optischen Messstrahls (13) auf dem Werkstück (1) zu kompensieren.

7. Das Laserbearbeitungssystem (100) nach einem der vorausgehenden Ansprüche, wobei der Bearbeitungsstrahl (10) und der optische Messstrahl (13) zumindest streckenweise koaxial überlagert sind.

8. Das Laserbearbeitungssystem (100) nach einem der vorausgehenden Ansprüche, wobei die Vorrichtung (200) eingerichtet ist, um den optischen Messstrahl (13) bezüglich einer Bearbeitungsrichtung (20) des Bearbeitungsstrahls (10) auf dem Werkstück (1) vor dem Bearbeitungsstrahl (10), nach dem Bearbeitungsstrahl (10), oder am Ort des Bearbeitungsstrahls (10) bereitzustellen.

9. Verfahren zur Abstandsmessung für ein Laserbearbeitungssystem (100), umfassend:
Kollimieren eines optischen Messstrahls (13) eines Kohärenz-Interferometers oder eines optischen Kohärenztomographen;
Ablenken des kollimierten optischen Messstrahls (13)durch Verschieben wenigstens eines transmissiven optischen Elements (222, 224) einer Ablenk-Optik (220); und
Fokussieren des abgelenkten optischen Strahls (13') und des Bearbeitungsstrahls (10) auf ein Werkstück (1) mittels einer Fokussier-Optik (130, 230), und
Bestimmen einer Tiefe oder eines Tiefenprofils einer Dampfkapillare (11) auf dem Werkstück (1) und/oder einer Topographie des Werkstücks (1) unter Verwendung eines vom Werkstück (1) reflektierten optischen Messstrahls (13),
wobei die Ablenk-Optik (220) ein erstes transmissives optisches Element (222) und ein zweites transmissives optisches Element (224) umfasst, die im Strahlengang hintereinander angeordnet sind und wovon zumindest eines verschoben wird ;
wobei das erste transmissive optische Element (222) eine plankonkave Linse ist und das zweite transmissive optische Element (224) eine plankonvexe Linse ist, oder wobei das erste transmissive optische Element (222) eine plankonvexe Linse ist und das zweite transmissive optische Element (224) eine plankonkave Linse ist;
wobei die plankonkave Linse einen ersten Radius aufweist und die plankonvexe Linse einen zweiten Radius aufweist, wobei der absolute Wert des ersten Radius und der absolute Wert des zweiten Radius im Wesentlichen gleich sind.

## Claims

1. A laser processing system (100), comprising:
a laser device (110) which is set up to direct a processing beam (10) onto a processing region of a workpiece (1); and
a device (200) for distance measurement, the device (200) comprising:
a collimator lens system (120, 210), which defines an optical axis (201) and is set up to collimate an optical measuring beam (13) of a coherence interferometer or an optical coherence tomograph;
a deflection lens system (220), which comprises at least one transmissive optical element (222, 224), which is displaceable relative to the optical axis (201) in order to deflect the collimated optical measuring beam (13) from the optical axis (201); and
a focusing lens system (130, 230), which is set up to focus the deflected optical beam (13') and the processing beam (10) onto a workpiece (1);
wherein said deflection lens system (220) is arranged in the beam path in front of the focusing lens system (130, 230);
wherein said deflection lens system (220) comprises a first transmissive optical element (222) and a second transmissive optical element (224), which are arranged one behind the other in the beam path and at least one of which is displaceable,
wherein the first transmissive optical element (222) is a plane-concave lens and the second transmissive optical element (224) is a plane-convex lens, or wherein the first transmissive optical element (222) is a plane-convex lens and the second transmissive optical element (224) is a plane-concave lens,
wherein the plane-concave lens has a first radius and the plane-convex lens has a second radius, wherein the absolute value of the first radius and the absolute value of the second radius are essentially identical.

2. The laser processing system (100) according to claim 1, wherein the at least one transmissive optical element (222, 224) is displaceable essentially perpendicular to the optical axis (201).

3. The laser processing system (100) according to one of the preceding claims, wherein the at least one transmissive optical element (222, 224) comprises a spherical lens and/or an aspherical lens.

4. The laser processing system (100) according to one of the preceding claims, wherein the first transmissive optical element (222) and the second transmissive optical element (224) are displaceable relative to one another.

5. The laser processing system (100) according to one of the preceding claims, wherein the first transmissive optical element (222) is displaceable relative to the optical axis (201) and the second transmissive optical element (224) is essentially fixed relative to the optical axis (201), or wherein the second transmissive optical element (224) is displaceable relative to the optical axis (201) and the first transmissive optical element (222) is essentially fixed relative to the optical axis (201), or wherein the first transmissive optical element (222) and the second transmissive optical element (224) are displaceable relative to the optical axis (201).

6. The device (200) according to one of the preceding claims, wherein the deflection lens system (220) is set up to compensate for aberrations of the optical measuring beam (13) on the workpiece (1).

7. The laser processing system (100) according to one of the preceding claims, wherein the processing beam (10) and the optical measuring beam (13) are coaxially superimposed at least in some sections.

8. The laser processing system (100) according to one of the preceding claims, wherein the device (200) is set up to provide the optical measuring beam (13), with respect to a processing direction (20) of the processing beam (10) on the workpiece (1), in front of the processing beam (10), after the processing beam (10), or at the site of the processing beam (10).

9. A method for distance measurement for a laser processing system (100), comprising:
collimating an optical measuring beam (13) of a coherence interferometer or an optical coherence tomograph;
deflecting the collimated optical measuring beam (13) by displacing at least one transmissive optical element (222, 224) of a deflection lens system (220); and
focusing of the deflected optical beam (13') and the processing beam (10) onto a workpiece (1) by means of a focusing lens system (130, 230), and
determining of a depth or a depth profile of a vapour capillary (11) on the workpiece (1) and/or a topography of the workpiece (1) using an optical measuring beam (13) reflected from the workpiece (1),
wherein said deflection lens system (220) comprises a first transmissive optical element (222) and a second transmissive optical element (224), which are arranged one behind the other in the beam path and at least one of which is being displaced;
wherein said first transmissive optical element (222) is a plane-concave lens and the second transmissive optical element (224) is a plane-convex lens, or wherein the first transmissive optical element (222) is a plane-convex lens and the second transmissive optical element (224) is a plane-concave lens;
wherein the plane-concave lens has a first radius and the plane-convex lens has a second radius, wherein the absolute value of the first radius and the absolute value of the second radius are essentially identical.

## Revendications

1. Système d'usinage au laser (100), comportant :
un dispositif à laser (110) qui est configuré pour diriger un faisceau d'usinage (10) sur une zone d'usinage d'une pièce (1) ; et
un dispositif (200) de mesure de distance, le dispositif (200) comportant :
une optique de collimation (110, 210) qui définit un axe optique (201) et est conçue pour collimater un faisceau de mesure optique (13) d'un interféromètre à cohérence ou d'un tomographe à cohérence optique ;
une optique de déviation (220) comportant au moins un élément optique transmissif (222, 224), qui peut être déplacé par rapport à l'axe optique (201) afin de dévier le faisceau de mesure optique collimaté (13) de l'axe optique (201) ; et
une optique de focalisation (130, 230) qui est conçue pour focaliser le faisceau de mesure optique dévié (13') et le faisceau d'usinage (10) sur une pièce (1) ;
dans lequel l'optique de déviation (220) est agencée dans le trajet de faisceau avant l'optique de focalisation (130, 230) ;
dans lequel l'optique de déviation (220) comporte un premier élément optique transmissif (222) et un second élément optique transmissif (224) qui sont agencés l'un derrière l'autre dans le trajet de faisceau et dont au moins un peut être déplacé,
dans lequel le premier élément optique transmissif (222) est une lentille concave plane et le second élément optique transmissif (224) est une lentille convexe plane, ou dans lequel le premier élément optique transmissif (222) est une lentille convexe plane et le second élément optique transmissif (224) est une lentille concave plane,
dans lequel la lentille concave plane a un premier rayon et la lentille convexe plane a un second rayon, dans lequel la valeur absolue du premier rayon et la valeur absolue du second rayon sont sensiblement égales.

2. Système d'usinage au laser (100) selon la revendication 1, dans lequel le au moins un élément optique transmissif (222, 224) peut être déplacé de manière sensiblement perpendiculaire à l'axe optique (201).

3. Système d'usinage au laser (100) selon l'une des revendications précédentes, dans lequel le au moins un élément optique transmissif (222, 224) comporte une lentille sphérique et/ou une lentille asphérique.

4. Système d'usinage au laser (100) selon l'une des revendications précédentes, dans lequel le premier élément optique transmissif (222) et le second élément optique transmissif (224) peuvent être déplacés l'un par rapport à l'autre.

5. Système d'usinage au laser (100) selon l'une des revendications précédentes, dans lequel le premier élément optique transmissif (222) peut être déplacé par rapport à l'axe optique (201) et le second élément optique transmissif (224) est sensiblement fixe par rapport à l'axe optique (201), ou dans lequel le second élément optique transmissif (224) peut être déplacé par rapport à l'axe optique (201) et le premier élément optique transmissif (222) est sensiblement fixe par rapport à l'axe optique (201), ou dans lequel le premier élément optique transmissif (222) et le second élément optique transmissif (224) peuvent être déplacés par rapport à l'axe optique (201).

6. Dispositif (200) selon l'une des revendications précédentes, dans lequel l'optique de déviation (220) est conçue pour compenser des aberrations du faisceau de mesure optique (13) sur la pièce (1).

7. Système d'usinage au laser (100) selon l'une des revendications précédentes, dans lequel le faisceau d'usinage (10) et le faisceau de mesure optique (13) sont superposés coaxialement au moins dans certaines portions.

8. Système d'usinage au laser (100) selon l'une des revendications précédentes, dans lequel le dispositif (200) est conçu pour délivrer le faisceau de mesure optique (13), par rapport à une direction d'usinage (20) du faisceau d'usinage (10) sur la pièce (1), avant le faisceau d'usinage (10), après le faisceau d'usinage (10) ou à l'emplacement du faisceau d'usinage (10).

9. Procédé de mesure de distance pour un système d'usinage au laser (100), comportant les étapes consistant à :
collimater un faisceau de mesure optique (13) d'un interféromètre à cohérence ou d'un tomographe à cohérence optique ;
dévier le faisceau de mesure optique collimaté (13) en déplaçant au moins un élément optique transmissif (222, 224) d'une optique de déviation (220) ; et
focaliser le faisceau optique dévié (13') et le faisceau d'usinage (10) sur une pièce (1) au moyen d'une optique de focalisation (130, 230), et
déterminer une profondeur ou un profil de profondeur d'un capillaire de vapeur (11) sur la pièce (1) et/ou une topographie de la pièce (1) en utilisant un faisceau de mesure optique (13) réfléchi par la pièce (1),
dans lequel l'optique de déviation (220) comporte un premier élément optique transmissif (222) et un second élément optique transmissif (224) qui sont agencés l'un derrière l'autre dans le trajet de faisceau et dont au moins un peut être déplacé ;
dans lequel le premier élément optique transmissif (222) est une lentille concave plane et le second élément optique transmissif (224) est une lentille convexe plane, ou dans lequel le premier élément optique transmissif (222) est une lentille convexe plane et le second élément optique transmissif (224) est une lentille concave plane ;
dans lequel la lentille concave plane a un premier rayon et la lentille convexe plane a un second rayon, dans lequel la valeur absolue du premier rayon et la valeur absolue du second rayon sont sensiblement égales.
